# EUROPÄISCHE PATENTSCHRIFT

(11) **EP 4 306 361 B1**
(45) Veröffentlichungstag und Bekanntmachung des Hinweises auf die Patenterteilung: **02.04.2025**
(21) Anmeldenummer: 23178639.3
(22) Anmeldetag: 12.06.2023
(51) Int. Cl.: B60P 7/08, B60P 7/15

(54) **ZURREINRICHTUNG ZUR TEILLADUNGSSICHERUNG IN FAHRTRICHTUNG EINES NUTZFAHRZEUGAUFBAUS, LADUNGSSICHERUNGSSYSTEM UND NUTZFAHRZEUGAUFBAU MIT EINER SOLCHEN ZURREINRICHTUNG**
LASHING DEVICE FOR PARTIALLY SECURING LOAD IN THE DIRECTION OF TRAVEL OF A COMMERCIAL VEHICLE STRUCTURE, LOAD SECURING SYSTEM AND COMMERCIAL VEHICLE STRUCTURE WITH SUCH A LASHING DEVICE
DISPOSITIF D'ARRIMAGE POUR LA SÉCURITÉ DE CHARGE PARTIELLE DANS LA DIRECTION DE DÉPLACEMENT D'UNE STRUCTURE DE VÉHICULE UTILITAIRE, SYSTÈME DE SÉCURISATION DE CHARGE ET STRUCTURE DE VÉHICULE UTILITAIRE DOTÉE D'UN TEL DISPOSITIF D'ARRIMAGE

(30) Priorität: 20.06.2022 DE 102022115254
(43) Veröffentlichungstag der Anmeldung: 17.01.2024
(73) Patentinhaber: Kögel Trailer GmbH, 89349 Burtenbach (DE)
(72) Erfinder: BROLL, Tobias, 86381 Krumbach-Billenhausen, (DE)
(74) Vertreter: Meissner Bolte Partnerschaft mbB

(56) Entgegenhaltungen:
- EP-A1- 3 705 330
- EP-B1- 2 993 112
- DE-A1- 102017 126 687
- DE-B3- 102008 044 503
- SE-C2- 536 789

## Beschreibung

Die Erfindung betrifft ein Ladungssicherungssystem sowie einen Nutzfahrzeugaufbau mit einem derartigen Ladungssicherungssystem.

Die Sicherung einer Ladung in einem Nutzfahrzeugaufbau ist ein wichtiger Gesichtspunkt des Gütertransports. Die Ladungssicherung kann über einen Formschluss oder einen Kraftschluss erfolgen. Besonders wirksam ist eine Ladungssicherung, die einen Formschluss bietet. Bei Nutzfahrzeugaufbauten ist dies üblicherweise dann erreicht, wenn der Nutzfahrzeugaufbau voll beladen ist, so dass die Ladung an einer Vorderwand, an den Seitenwänden und einer Rückwand im Wesentlichen bündig anliegt. Die Wände des Nutzfahrzeugaufbaus bilden so das entsprechende formschlüssige Ladungssicherungssystem.

In der Praxis sind die Nutzfahrzeugaufbauten jedoch nur in den wenigsten Fällen voll beladen. Meist wird die Ladung formschlüssig gegen die Vorderwand eines Nutzfahrzeugaufbaus gesichert, wobei sich zur Rückwand hin eine Ladungslücke bildet. Eine solche kann entstehen, weil der Nutzfahrzeugaufbau nicht voll beladen wird oder bei mehreren Abladestationen eine Teilentladung erfolgt, so dass eine weitere Beförderung von Gütern bei Teilbeladung vorgenommen wird. In anderen Fällen ist es oft zweckmäßig, eine Ladelücke zur Vorderwand hin zu belassen. Dies kann dann sinnvoll, wenn andernfalls die Sattellast bei einem Nutzfahrzeugaufbau eines Sattelaufliegers überschritten werden würde. Dann ist es vorteilhaft, die Ladung näher an der Rückwand zu positionieren, um die Sattelkupplung zu entlasten.

In jedem Fall ist auch bei einer Teilbeladung eines Nutzfahrzeugaufbaus darauf zu achten, dass eine Ladungssicherung bei einer Teilbeladung in oder entgegen der Fahrtrichtung sichergestellt ist. Aufgrund gesetzlicher Vorschriften ist es beispielsweise erforderlich, dass die Ladung mit dem 0,8-fachen der Gewichtskraft der Ladung nach vorne abgesichert wird. Für eine Absicherung nach hinten, also entgegen der Fahrtrichtung, liegt die Forderung bei dem 0,5-fachen der Gewichtskraft der Ladung. Weil diese Anforderungen auch durch die Gleitreibung erfüllt werden können, besteht grundsätzlich die Möglichkeit, die Ladung durch Niederzurren kraftschlüssig in oder entgegen der Fahrtrichtung abzusichern. Die kraftschlüssige Absicherung hat jedoch mehrere Nachteile.

Einerseits ist das Niederzurren von Ladung umständlich, zeitaufwändig und im Hinblick auf die Wirksamkeit der Ladungssicherung schwer kontrollierbar. Andererseits besteht durch das starke Niederzurren der Ladung die Gefahr, die Ladung zu beschädigen. Ladung, die nicht formstabil ist, kann auf diese Weise nicht gesichert werden.

Eine Alternative besteht darin, eine formschlüssige Ladungssicherung in oder entgegen der Fahrtrichtung zu bewerkstelligen. Dies erfolgt üblicherweise dadurch, dass Sperrbalken zwischen die parallelen Seitenwände des Nutzfahrzeugaufbaus eingehängt werden. Allerdings haben auch Sperrbalken diverse Nachteile. Einerseits sind Sperrbalken sperrig und müssen bei Nichtgebrauch entsprechend verstaut werden. Das Installieren und Entfernen von Sperrbalken ist außerdem mit hohem Arbeitsaufwand verbunden und birgt außerdem wegen der Sperrigkeit und des Gewichts der Sperrbalken eine nicht unerhebliche Verletzungsgefahr. Sperrbalken, die in einer gewissen Höhe in dem Nutzfahrzeugaufbau eingehängt werden müssen, könnten beim Deinstallieren beispielsweise herunterfallen und beim Ladepersonal zu Kopfverletzungen führen.

Bei Nutzfahrzeugaufbauten, die als Schiebeplanen- oder Seitenplanenaufbauten gestaltet sind, besteht die weitere Besonderheit darin, dass diese üblicherweise entlang des Dachholms verschiebbare Mittelrungen aufweisen. Diese Mittelrungen sind meist nur mit ihrem Fuß im Bereich der Ladefläche verriegelt und in einer Schiene des Dachholms frei verschiebbar. Solche Mittelrungen können über Sperrbalken kaum eine vernünftige formschlüssige Ladungssicherung bewerkstelligen, da eine auf den Sperrbalken wirkende Kraft zu einem Verschieben des oberen Teils der Mittelrunge und damit zu einem Verkanten oder gar einem Verlieren der Mittelrunge führen kann. Jedenfalls können die auftretenden Kräfte auf diese Weise nicht sinnvoll in den Nutzfahrzeugaufbau abgeleitet werden.

Weitere formschlüssige Ladungssicherungssysteme, die beispielsweise mit Trennwänden arbeiten, welche am Dach des Nutzfahrzeugaufbaus befestigt sind und sich nach unten schwenken lassen, sind üblicherweise sperrig, teuer und benötigen Platz im Innenraum des Nutzfahrzeugaufbaus, der das Ladevolumen beeinträchtigt.

DE 10 2008 044 503 B3 offenbart ein Ladungssicherungssystem mit einem Querträger und einem Lagerschuh als Sicherungselement. Das Sicherungselement weist mehrere Sicherungshaken auf, die freie Schenkel aufweisen, welche parallel zur Unterseite des Sicherungselements verlaufen und in dieselbe Richtung orientiert sind. Die freien Schenkel sind über einen Verbindungsschenkel mit der Unterseite des Sicherungselements verbunden.

DE 10 2017 126 687 A1 und EP 2 993 112 B1 offenbaren Lattentaschen, in die Latten zur seitlichen Ladungssicherung eingesetzt werden können.

Aus der SE 536 789 C2 ist ein Ladungssicherungssystem bekannt, das Mittelrungen zum Höhenverstellen eines Trailerdachs umfasst. Die Mittelrungen weisen dachseitig eine teleskopartig bewegliche Rungenstange auf. An den Mittelrungen sind Lattentaschen angeordnet. Die Mittelrungen weisen kopf- und bodenseitig Fixiereinrichtungen auf, um die Rungen ortsfest zu fixieren bzw. zum Verstellen zu lösen. Aus der EP 370 5330 A1 ist ein Ladungssicherungssystem bekannt, das Mittelrungen zum Höhenverstellen eines Trailerdachs umfasst. Eine Rungenarretierung und wenigstens eine Holmarretierung sind in wenigstens einer Längsrichtung des Dachs in der Gebrauchsstellung formschlüssig im Eingriff und in der Nichtgebrauchsstellung außer Eingriff.

Der Erfindung liegt vor diesem Hintergrund die Aufgabe zu Grunde, ein Ladungssicherungssystem anzugeben, das eine einfache, kostengünstige und flexible Teilladungssicherung in Fahrtrichtung oder entgegen der Fahrtrichtung eines Nutzfahrzeugaufbaus ermöglicht. Ferner ist es Aufgabe der Erfindung, einen Nutzfahrzeugaufbau anzugeben.

Diese Aufgabe wird im Hinblick auf das Ladungssicherungssystem durch den Gegenstand des Patentanspruchs 1 gelöst. Im Hinblick auf den Nutzfahrzeugaufbau zeigt der Gegenstand des Patentanspruchs 9 eine Lösung auf.

So beruht die Erfindung konkret auf dem Gedanken, ein Ladungssicherungssystem mit wenigstens einer Zurreinrichtung zur Teilladungssicherung in oder entgegen der Fahrtrichtung eines Nutzfahrzeugaufbaus mit einer Verankerungsseite, die wenigstens zwei, insbesondere wenigstens drei, Verankerungselemente zum formschlüssigen Eingriff in ein Lochraster einer Runge des Fahrzeugaufbaus aufweist, und einer Runge eines Nutzfahrzeugaufbaus anzugeben. Die Runge weist ein Lochraster zur Aufnahme der Zurreinrichtung, insbesondere in unterschiedlichen Höhenpositionen, auf und ist zwischen einem Dachholm und einem Boden des Nutzfahrzeugaufbaus form- und/oder kraftschlüssig fixierbar oder fixiert.

Die Kombination der Zurreinrichtung mit einer Runge, die zwischen einem Dachholm und einem Boden form- und/oder kraftschlüssig fixierbar oder fixiert ist, ist besonders vorteilhaft, weil auf diese Weise Ladungssicherungskräfte gut und sicher in den Nutzfahrzeugaufbau eingeleitet werden können. Die zwischen dem Dachholm und dem Boden fixierbare Runge kann die Einleitung der Kräfte im Nutzfahrzeugaufbau dann besonders gut bewerkstelligen, wenn die Runge, wie es bevorzugt vorgesehen ist, sowohl am Dachholm, als auch am Boden formschlüssig fixierbar ist.

Erfindungsgemäß sind am Dachholm und an einem Rungenkopf der Runge Arretiermittel vorgesehen, die in einer Verriegelungsstellung der Runge formschlüssig ineinandergreifen, um ein Verschieben der Runge entlang des Dachholms zu unterbinden. Die Arretiermittel umfassen zwei Blockierelemente und ein Eingriffselement, das in der Verriegelungsstellung formschlüssig zwischen die zwei Blockierelemente eingreift.

Auf diese Weise ist der Rungenkopf entlang des Dachholms sowohl in Fahrtrichtung als auch entgegen der Fahrtrichtung formschlüssig gesichert. Die Runge kann so Ladungssicherungskräfte gut in den Dachholm und damit in den Nutzfahrzeugaufbau einleiten. Ferner ist eine mögliche Verschiebebewegung der Runge entlang einer Schiene im Dachholm bedarfsweise blockierbar.

Das Ladungssicherungssystem umfasst in einer bevorzugten Ausführungsform wenigstens ein flexibles Zurrmittel, insbesondere einen Gurt oder Zurrgurt, ein Seil, ein Netz oder eine Kette, das mit der Zurreinrichtung verbindbar ist. Insbesondere kann das Zurrmittel mit einer Öse der Zurreinrichtung verbindbar sein. Besonders bevorzugt ist es, wenn das Ladungssicherungssystem zwei an gegenüberliegenden Seitenwänden eines Nutzfahrzeugaufbaus angeordnete Rungen aufweist, wobei jeder Runge wenigstens eine Zurreinrichtung zugeordnet ist. Das Zurrmittel kann sich dann zwischen den beiden Zurreinrichtungen erstrecken. Dadurch verläuft das Zurrmittel zwischen den Seitenwänden des Nutzfahrzeugaufbaus. Das flexible Zurrmittel kann auf diese Weise beispielsweise einen Sperrbalken ersetzen. Wegen der Flexibilität des Zurrmittels ist dieses jedoch deutlich einfacher zu handhaben, leicht und platzsparend verstaubar und zeichnet sich auch durch ein vergleichsweise geringes Gewicht aus. Indem das Zurrmittel jedoch über die Zurreinrichtungen mit Rungen verbindbar ist, die sich zwischen dem Dachholm und dem Boden form- und/oder kraftschlüssig fixieren lassen, können dennoch hohe Kräfte in den Nutzfahrzeugaufbau geleitet werden. Damit ist also eine flexiblere, einfach einsetzbare und kostengünstige Ladungssicherung geschaffen.

Bei einer weiteren bevorzugten Ausführungsform weisen die Verankerungselemente der Zurreinrichtung jeweils einen parallel zur Verankerungsseite verlaufenden freien Schenkel auf, wobei alle freien Schenkel in dieselbe Richtung orientiert und durch jeweils einen Verbindungsschenkel mit der Verankerungsseite verbunden sind.

Die Zurreinrichtung zeichnet sich durch eine besonders hohe Flexibilität aus, da sie durch den formschlüssigen Eingriff in einem Lochraster einer Runge an unterschiedlichen Positionen einfach und schnell anbringbar ist. Mittels dieser Zurreinrichtung ist dann eine Ladungssicherung auf unterschiedlichen Höhen des Nutzfahrzeugaufbaus möglich. Der formschlüssige Eingriff zwischen den Verankerungselementen und dem Lochraster ermöglicht dabei eine schnelle Installation der Zurreinrichtung und erlaubt es außerdem, die Zurreinrichtung bedarfsweise in unterschiedlichen Positionen anzubringen. Ein Positionswechsel ist dadurch auch schnell und einfach möglich. Die Zurreinrichtung kann überdies eine Öse zur Aufnahme eines Zurrmittels, beispielsweise eines Gurts bzw. Zurrgurts, eines Seils, eines Netzes oder einer Kette, aufweisen.

Bei einer bevorzugten Ausführungsform weist ein randseitiges Verankerungselement der Zurreinrichtung einen Fortsatz als eine Einführhilfe auf. Der Fortsatz kann sich in Verlängerung des freien Schenkels ausgehend von dem Verbindungsschenkel in eine Gegenrichtung zu dem freien Schenkel erstrecken und eine Länge aufweisen, die größer als die Länge des freien Schenkels ist. Der als Einführhilfe gestaltete Fortsatz erleichtert die Installation der Zurreinrichtung und trägt so zur verbesserten Handhabung derselben bei.

Die Handhabung der Zurreinrichtung wird außerdem dadurch erleichtert, dass bei einer bevorzugten Variante der Zurreinrichtung alle freien Schenkel die gleiche Länge aufweisen. Vorzugsweise ist die Länge der freien Schenkel an die Höhe der Löcher des Lochrasters in der Runge angepasst. Indem die freien Schenkel jeweils die gleiche Länge aufweisen, ist die Flexibilität der Zurreinrichtung im Hinblick auf die Positionierung an beliebigen Stellen entlang des Lochrasters verbessert.

Die freien Schenkel und der Fortsatz können jeweils eine zur Verankerungsseite gewandte Innenfläche und eine der Innenfläche gegenüberliegend angeordnete Außenfläche aufweisen, wobei die Innenfläche der freien Schenkel und des Fortsatzes miteinander fluchten. Wenn die Zurreinrichtung an einer Runge installiert ist, liegen die Innenflächen der freien Schenkel vorzugsweise an einer Innenseite des Lochrasters der Runge an und fixieren die Zurreinrichtung formschlüssig an der Runge. Indem die Innenflächen der freien Schenkel und die Innenflächen des Fortsatzes miteinander fluchten, liegt auch die Innenfläche des Fortsatzes an der Innenseite des Lochrasters an und trägt so zur formschlüssigen und stützenden Verbindung zwischen der Zurreinrichtung und der Runge bei. Dies erhöht die Stabilität des Ladungssicherungssystems mit der Zurreinrichtung.

Die Außenfläche des Fortsatzes kann geneigt sein, so dass sich der Fortsatz mit zunehmendem Abstand von dem Verbindungsschenkel verjüngt. Mit anderen Worten kann der Fortsatz im Wesentlichen eine Spitze aufweisen, die gegenüber dem freien Schenkel angeordnet ist. In Richtung der Spitze hin verjüngt sich der Fortsatz vorzugsweise. Diese Gestaltung des Fortsatzes erleichtert das Einführen des Fortsatzes in ein Lochraster der Runge und ermöglicht so eine schnelle und einfache Installation der Zurreinrichtung.

Um hohe Zurrkräfte aufnehmen zu können, ist es bevorzugt, wenn die Zurreinrichtung einstückig, insbesondere als Stanzteil, als Gussteil oder als laser- oder wasserstrahlgeschnittenes Blech, ausgebildet ist.

Ein nebengeordneter Aspekt der Erfindung betrifft einen Nutzfahrzeugaufbau mit einem Boden, wenigstens einem Dachholm eines, insbesondere höhenverstellbaren Dachs und mit einem zuvor beschriebenen Ladungssicherungssystem. Bei dem erfindungsgemäßen Nutzfahrzeugaufbau erstreckt sich die Runge des Ladungssicherungssystems zwischen dem Dachholm und dem Boden und ist am Dachholm verschiebbar gelagert. Die Runge ist außerdem kraft- und/oder formschlüssig mit dem Boden verbindbar und von einer Verriegelungsstellung in eine Entriegelungsstellung, und umgekehrt, überführbar. Dabei sind am Dachholm und an einem Rungenkopf der Runge Arretiermittel vorgesehen, die in einer Verriegelungsstellung der Runge formschlüssig ineinandergreifen, um ein Verschieben der Runge entlang des Dachholms zu unterbinden. Die Arretiermittel umfassen zwei Blockierelemente und ein Eingriffselement, wobei das Eingriffselement in der Verriegelungsstellung formschlüssig zwischen die zwei Blockierelemente eingreift.

Der erfindungsgemäße Nutzfahrzeugaufbau bietet so eine sehr einfach handhabbare, flexibel einsetzbare und kostengünstige Möglichkeit, Ladung in Fahrtrichtung oder entgegen der Fahrtrichtung des Nutzfahrzeugaufbaus effektiv abzusichern. Dies wird insbesondere dann erreicht, wenn in den gegenüberliegenden Seitenwänden des Nutzfahrzeugaufbaus jeweils wenigstens eine Runge mit einem Lochraster vorgesehen ist, in welche eine Zurreinrichtung einsetzbar ist. Ein Zurrmittel kann sich dann zwischen den beiden gegenüberliegenden Zurreinrichtungen erstrecken und so eine Ladung in Fahrtrichtung oder entgegen der Fahrtrichtung absichern. Das Zurrmittel muss bei dieser Anordnung nicht zwingend mit Kraft gegen die Ladung gespannt sein. Es reicht aus, wenn das Zurrmittel bündig an der Ladung anliegt und so eine rein formschlüssige Abstützung der Ladung in Fahrtrichtung oder entgegen der Fahrtrichtung bewirkt. Das flexible Zurrmittel bildet so im Wesentlichen einen Ersatz für einen ansonsten aufwändig zu installierenden Sperrbalken.

Die Blockierelemente können am Dachholm und das Eingriffselement am Rungenkopf angeordnet sein. Alternativ kann auch vorgesehen sein, dass die Blockierelemente am Rungenkopf und das Eingriffselement am Dachholm angeordnet sind. Beide Varianten sind möglich. Zweckmäßig ist es jedenfalls, wenn eine formschlüssige Verbindung in der Verriegelungsstellung sowohl in Fahrtrichtung als auch entgegen der Fahrtrichtung erreicht ist.

Die Blockierelemente können außerdem voneinander unabhängig am Dachholm oder am Rungekopf befestigt sein. Auch möglich ist es, dass die Blockierelemente einstückig über einen Verbindungsabschnitt zu einem einstückigen Blockiermittel verbunden sind, das am Dachholm oder dem Rungenkopf befestigt ist. Generell hat die Verwendung von Blockierelementen und Eingriffselementen den Vorteil, dass diese auch bei bestehenden Rungen einfach nachrüstbar sind. Die Blockierelemente bzw. das Eingriffselement müssen lediglich am Dachholm und/oder Rungenkopf entsprechend fixiert werden, beispielsweise durch Vernieten oder Anschweißen. Bei der einstückigen Variante, bei welcher die Blockierelemente über den Verbindungsabschnitt verbunden sind, ist diese Nachrüstung nochmals vereinfacht, da weniger Bauteile eingesetzt werden müssen.

In einer weiteren bevorzugten Ausführungsform der Erfindung ist vorgesehen, dass die Blockierelemente oder das Eingriffselement auf einer horizontalen Fläche des Dachholms oder des Rungenkopfs angeordnet sind. Diese Variante ist besonders zweckmäßig, um ein Scheuern der Blockierelemente oder der Eingriffselemente an einer Seitenplane und/oder an einer Ladung zu vermeiden. Die Blockierelemente und das Eingriffselement sind insoweit im Wesentlichen versteckt eingebaut.

Bei einer weiteren bevorzugten Ausführungsform des erfindungsgemäßen Nutzfahrzeugaufbaus ist vorgesehen, dass die Blockierelemente und das Eingriffselement in der Verriegelungsstellung zumindest teilweise einen vertikalen Formschluss bilden. Der vertikale Formschluss ist besonders bevorzugt für Nutzfahrzeugaufbauten, die ein höhenverstellbares Dach aufweisen. Indem die Blockierelemente und das Eingriffselement in der Verriegelungsstellung zumindest teilweise einen vertikalen Formschluss bilden, wird vermieden, dass sich der Formschluss zwischen den Blockierelementen und den Eingriffselementen, also zwischen der Runge und dem Dachholm, durch die Höhenverstellung des Daches löst. Beim Anheben des Daches sorgt der vertikale Formschluss vielmehr dafür, dass die Runge entweder eine Höhenverstellung blockiert oder sich mit dem Anheben des Daches ebenfalls streckt. Jedenfalls wird so verhindert, dass versehentlich die Ladungssicherungsfunktion des Nutzfahrzeugaufbaus beeinträchtigt wird.

Konkret können die Blockierelemente sich vertikal erstrecken und einen trapezförmigen oder parallelogrammförmigen Eingriffsraum zwischen sich bilden, wobei das Eingriffselement in vertikaler Richtung trapezförmig oder parallelogrammförmig komplementär zu dem trapezförmigen oder parallelogrammförmigen Eingriffsraum ausgebildet ist. Eine solche Gestaltung der Blockierelemente und des Eingriffselements bewirkt, dass einerseits ein teilweiser Formschluss in vertikaler Richtung erreicht wird, der beim Anheben eines Dachs verhindert, dass die fixierende Verbindung zwischen der Runge und dem Dachholm gelöst wird. Durch den trapezförmigen oder parallelogrammförmigen Eingriffsraum und das komplementär trapezförmig oder parallelogrammförmig ausgebildete Eingriffselement ist es jedoch dennoch möglich, durch eine Verschiebung der Runge in Fahrtrichtung oder entgegen der Fahrtrichtung die Verriegelungsstellung zu lösen und die Runge in die Entriegelungsstellung zu bringen, in der die Runge mit dem Dachholm nicht mehr fest, sondern lediglich verschiebbar verbunden ist.

Die Erfindung wird im Folgenden anhand von Ausführungsbeispielen unter Bezugnahme auf die beigefügten Zeichnungen näher erläutert. Darin zeigen
- Fig. 1: eine perspektivische Ansicht einer Zurreinrichtung eines erfindungsgemäßen Ladungssicherungssystems nach einem bevorzugten Ausführungsbeispiel;
- Fig. 2: eine perspektivische Ansicht eines erfindungsgemäßen Ladungssicherungssystems nach einem bevorzugten Ausführungsbeispiel;
- Fig. 3: eine Seitenansicht eines erfindungsgemäßen Nutzfahrzeugaufbaus mit einem Ladungssicherungssystem nach einem bevorzugten Ausführungsbeispiel;
- Fig. 4: eine perspektivische Ansicht des Nutzfahrzeugaufbaus gemäß Fig. 3; und
- Fig. 5-8: jeweils eine perspektivische Darstellung mit zwei Rungen eines erfindungsgemäßen Ladungssicherungssystems nach einem bevorzugten Ausführungsbeispiel, wobei die Rungen jeweils unterschiedliche Arretierelemente aufweisen und in den einzelnen Figuren jeweils in einer Verriegelungsstellung und in einer entriegelten Stellung dargestellt sind.

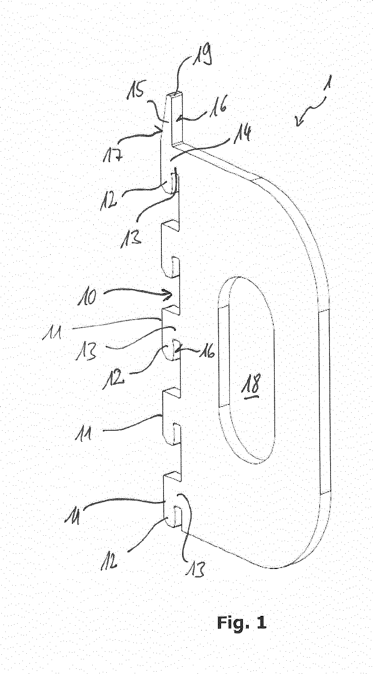

Die in Fig. 1 gezeigte Zurreinrichtung 1 dient zur Teilladungssicherung in oder entgegen der Fahrtrichtung eines Nutzfahrzeugaufbaus. Die Zurreinrichtung 1 ist dazu mit einem Lochraster 31 einer Runge 30 verbindbar, wobei die Verbindung vorzugsweise durch formschlüssigen Eingriff erfolgt. Dazu weist die Zurreinrichtung 1 eine Verankerungsseite 10 auf, die wenigstens zwei Verankerungselemente 11 umfasst. Bei dem Ausführungsbeispiel gemäß Fig. 1 sind insgesamt fünf Verankerungselemente 11 vorgesehen, wobei jedes der Verankerungselemente 11 jeweils einen parallel zur Verankerungsseite 10 verlaufenden freien Schenkel 12 aufweist. Jeder freie Schenkel 12 weist zur Verankerungsseite 10 einen Abstand auf. Der Abstand wird durch einen Verbindungsschenkel 13 überbrückt, der den freien Schenkel 12 mit der Verankerungsseite 10 verbindet. Die freien Schenkel 12 der Verankerungselemente 11 erstrecken sich jeweils in dieselbe Richtung.

Die Zurreinrichtung 1 umfasst ferner eine Öse 18, die in der Zurreinrichtung 1 ausgebildet ist. Konkret ist die Zurreinrichtung 1 als Platte mit einer Öffnung ausgebildet, wobei die Öffnung die Öse 18 bildet. Die Verankerungselemente 11 bilden einstückige Fortsätze der Platte. Die Öse 18 weist vorzugsweise die Form eines Langlochs auf, mit einem geraden Lochabschnitt, der durch zwei halbkreisförmige Lochabschnitte begrenzt ist. Die Öse 18 ist daher besonders geeignet, um Zurrmittel in Form von Gurten oder Zurrgurten aufzunehmen.

Die Verankerungselemente 11 mit ihren freien Schenkeln 12 ermöglichen es, dass die Zurreinrichtung 1 in ein Lochraster einer Runge 30 quasi eingehängt werden kann. Vorzugsweise sind entlang einer passenden Runge 30 in gleichmäßigen Abständen, die den Abständen der Verankerungselemente 11 entsprechen, Öffnungen ausgebildet. Diese Öffnungen weisen vorzugsweise eine Höhe auf, die wenigstens der Höhe der Verankerungselemente 11 entsprechen. Die Verankerungselemente 11 können so in die Öffnungen des Lochrasters 31 eingreifen. Die Schwerkraft sorgt vorzugsweise dafür, dass die Zurreinrichtung 1 dann absinkt, so dass die freien Schenkel 12 das Lochraster 31 hintergreifen. Das Lochraster 31 ist demzufolge vorzugsweise in einem Blech oder sonstigen Bauteil der Runge 30 ausgebildet, dessen Stärke nicht größer als der Abstand zwischen dem freien Schenkel 12 und der Verankerungsseite 10 ist.

Um eine gute Fixierung der Zurreinrichtung 1 zu gewährleisten, ist vorgesehen, dass ein randseitiges Verankerungselement 14, dessen Verbindungsschenkel 13 vorzugsweise bündig mit einer Außenkante der Zurreinrichtung 1 verläuft, einen zusätzlichen Fortsatz 15 als Einführhilfe aufweist. Der Fortsatz 15 erstreckt sich ausgehend von dem Verbindungsschenkel 13 des randseitigen Verankerungselements 14 in eine zum freien Schenkel 12 entgegengesetzte Richtung. Der Fortsatz 15 ist darüber hinaus vorzugsweise länger als der freie Schenkel 12. Sowohl der Fortsatz 15, als auch der freie Schenkel 12 weisen jeweils eine Innenfläche 16 auf, die der Verankerungsseite 10 zugewandt ist und parallel zu dieser verläuft. Die Innenflächen 16 des freien Schenkels 12 und des Fortsatzes 15 fluchen zueinander. Wie in Fig. 1 erkennbar ist, weist der Fortsatz 15 außerdem eine Außenfläche 17 auf, die der Innenfläche 16 gegenüberliegend angeordnet ist, und zur Innenfläche 16 hin unter einem Winkel verläuft. Die Außenfläche 17 ist folglich nicht parallel zu einer Fläche 16 ausgerichtet, sondern ist vielmehr geneigt, so dass sich der Fortsatz 15 mit zunehmendem Abstand vom Verbindungsschenkel 13 verjüngt. Konkret nähert sich die Außenfläche 17 mit zunehmendem Abstand vom Verbindungsschenkel 13 der Innenfläche 16 an, so dass der Fortsatz 15 insgesamt eine keilförmige Form aufweist.

Die keilförmige Gestaltung des Fortsatzes 15 ermöglicht es, den Fortsatz 15 mit seiner Spitze 19 voran in ein Loch des Lochrasters 31 der Runge 30 einzuführen. Sobald der Fortsatz 15 nahezu vollständig in das Loch eingreift, kann die Zurreinrichtung 1 in eine vertikale Position geschwenkt werden, wodurch dann die übrigen Verankerungselemente 11 in die unterhalb angeordneten Löcher des Lochrasters 31 eingreifen. Daraufhin wird die Zurreinrichtung 1 nach unten versetzt, wodurch die freien Schenkel 12 der Verankerungselemente 11 das Lochraster 31 hintergreifen. Da der Fortsatz 15 eine Höhe aufweist, die höher als die freien Schenkel 12 ist, bleibt auch die Innenfläche 16 des Fortsatzes 15 in einem Hintergriff mit dem Lochraster 31. Auf diese Weise ist die Zurreinrichtung 1 fest und formschlüssig mit dem Lochraster 31 der Runge 30 verbunden und kann auch durch Kräfte, die auf ein mit der Zurreinrichtung 1 verbundenes Zurrmittel wirken, nicht ohne weiteres aus der Verankerung gelöst werden.

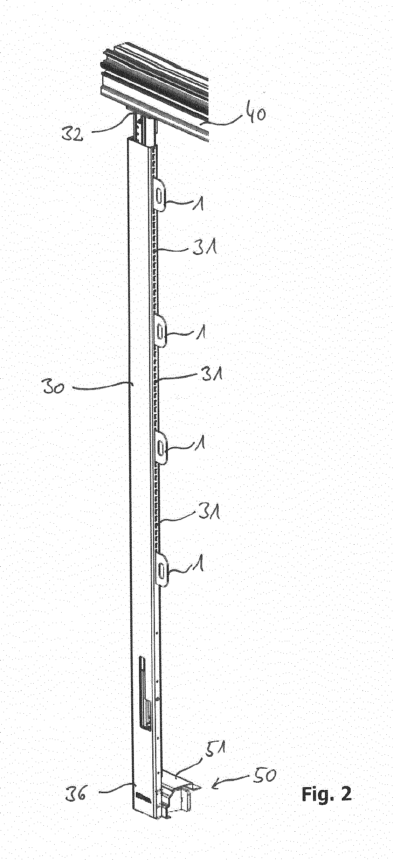

Fig. 2 zeigt die Zurreinrichtung 1 als Teil eines Ladungssicherungssystems. Das Ladungssicherungssystem umfasst vorzugsweise mehrere Zurreinrichtungen 1 und wenigstens eine Runge 30 mit einem Lochraster 31. Die Runge 30 ist zwischen einem Dachholm 40 und einem Boden 50, der einen Außenrahmen 51 umfassen kann, angeordnet. Die Runge 30 ist vorzugsweise entlang des Dachholms 30 verschiebbar. Insbesondere kann der Dachholm 30 eine Schiene aufweisen, wobei die Runge 30 an ihrem Rungenkopf 32 Rollen trägt, die mit der Schiene so im Eingriff stehen, dass ein Verschieben der Runge 30 entlang des Dachholms 40 möglich ist. Im Bereich eines Rungenfußes 36 weist die Runge 30 vorzugsweise einen Fixiermechanismus auf, der eine kraftschlüssige und/oder formschlüssige Fixierung der Runge 30 am Boden 50 ermöglicht.

Wie in Fig. 2 gut erkennbar ist, ist das Lochraster an einer Seite der Runge 30 ausgebildet. Die Seite der Runge 30 verläuft vorzugsweise in einer Ebene, die in Bezug auf einen Nutzfahrzeugaufbau parallel zu einer Vorderwand und/oder einer Rückwand verläuft. Die Seite der Runge 30 verläuft also im Wesentlichen senkrecht zu einer Seitenwand des Nutzfahrzeugaufbaus.

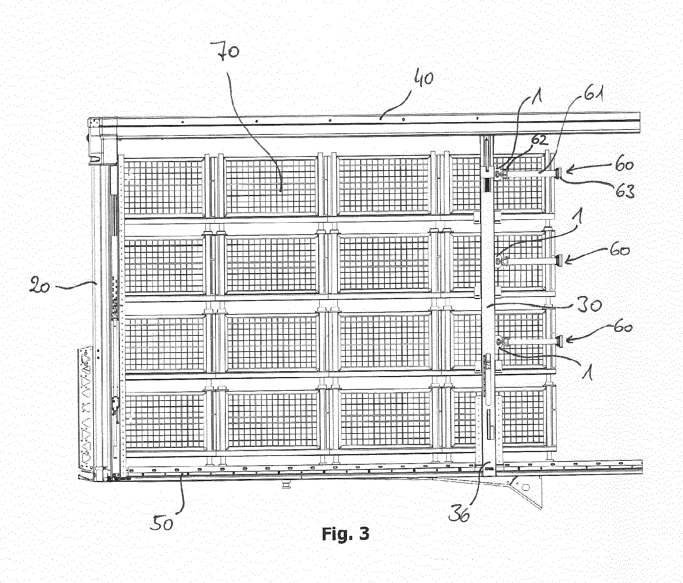

In das Lochraster 31 sind bei dem in Fig. 2 dargestellten Ausführungsbeispiel vier Zurreinrichtungen 1 eingesetzt. Die Zurreinrichtungen können Zurrmittel aufnehmen, wobei als Zurrmittel vorzugsweise Spanngurte bzw. Zurrgurte 60 verwendet werden. Derartige Zurrgurte 60 sind in Fig. 3 erkennbar.

Die Zurrgurte 60 weisen vorzugsweise wenigstens einen, vorzugsweise zwei Gurte 61, die jeweils an einem Ende Haken 62 tragen, auf. Die Haken 62 können in die Ösen 18 der Zurreinrichtungen 1 eingreifen. Die jeweils zwei Gurte 61 der Zurrgurte 60 sind über eine Spanneinrichtung 63 miteinander verbindbar oder verbunden. Die Spanneinrichtung 63 umfasst vorzugsweise einen Spannhebel und eine Ratsche, so dass die Gurte 61 gegeneinander verspannt werden können. Auf diese Weise kann die Länge des Zurrgurts 60 eingestellt werden.

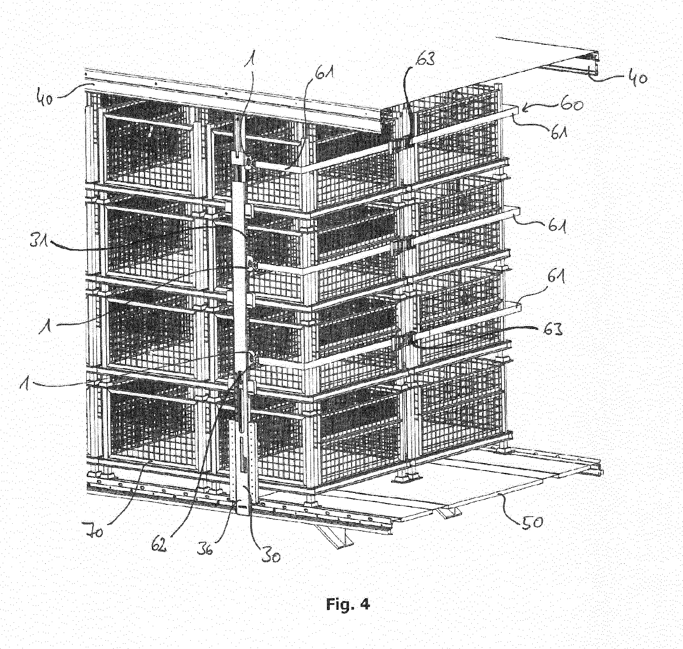

Um eine Teilbeladung in einem Nutzfahrzeugaufbau zu sichern, können an zwei Rungen 30, die an gegenüberliegenden Seitenwänden des Nutzfahrzeugaufbaus angeordnet sind, jeweils wenigstens eine Zurreinrichtung 1 vorgesehen sein. Der Zurrgurt 60 verläuft dann vorzugsweise von der Zurreinrichtung 1 an der rechten Nutzfahrzeugaufbauseite zur Zurreinrichtung 1 an der linken Nutzfahrzeugaufbauseite. Dabei wird der Zurrgurt 60 um die Ladung gelegt, wie dies in den Fig. 3 und 4 erkennbar ist. Die Spanneinrichtung 43 wird genutzt, um den Zurrgurt 60 in seiner Länge so einzustellen, dass der Zurrgurt 60 bündig an der Ladung anliegt, ohne jedoch eine erhebliche Spannung auf die Ladung aufzubringen.

In den Fig. 3 und 4 ist eine Teilladungssicherung entgegen der Fahrtrichtung des Nutzfahrzeugaufbaus gezeigt. Der Nutzfahrzeugaufbau umfasst eine Vorderwand 20, an der die Ladung 70 formschlüssig anliegt. Um die Ladung nach hinten formschlüssig zu sichern, sind insgesamt drei Zurrgurte 60 vorgesehen, die jeweils zwischen zwei an gegenüberliegenden Seitenwänden des Nutzfahrzeugaufbaus angeordneten Zurreinrichtungen 1 eingehakt sind. Bei dem Ausführungsbeispiel gemäß den Fig. 3 und 4 umfasst die Ladung 70 mehrere Gitterboxen, die übereinander gestapelt sind. Insgesamt sind vier Reihen von Gitterboxen übereinander im Nutzfahrzeugaufbau angeordnet. Um eine wirksame Ladungssicherung entgegen der Fahrtrichtung zu erreichen, ist für jede der oberen drei Reihen von Gitterboxen jeweils ein Zurrgurt 60 vorgesehen. Der Zurrgurt 60 erstreckt sich dabei von einer Zurreinrichtung 1 auf der linken Nutzfahrzeugaufbauseite zu einer Zurreinrichtung 1 auf der rechten Nutzfahrzeugaufbauseite. Die Zurreinrichtungen 1 sind dabei jeweils in entsprechender, vorzugsweise gleicher, Höhe im Lochraster 31 der seitlichen Rungen 30 eingehakt.

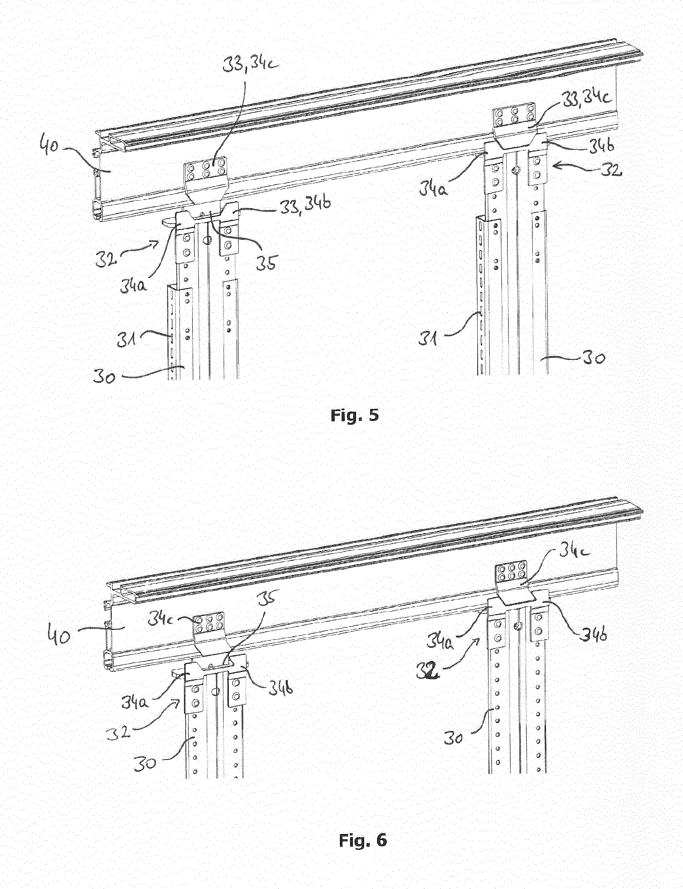

Um zu gewährleisten, dass die durch die Zurrmittel aufgenommenen Ladungssicherungskräfte über die Rungen 30 wirksam in den Nutzfahrzeugaufbau eingeleitet werden und somit auch eine Ladungssicherung effektiv erfolgt, sind die Rungen 30 mit jeweils einem Mechanismus ausgestattet, der eine Verriegelung der Rungen 30 auch gegenüber dem Dachholm 40 ermöglicht. In den Fig. 5 bis 18 sind entsprechenden Verriegelungsmechanismen dargestellt und werden nachfolgend im Detail erläutert.

Für alle Ausführungsbeispiele gemäß Fig. 5 bis 6 gilt, dass die Runge 30 von einer Verriegelungsstellung in eine entriegelte Stellung überführbar ist. Der dafür erforderliche Arretiermechanismus umfasst Arretiermittel 33, die sowohl am Dachholm 40, als auch am Rungenkopf 32 der Runge vorgesehen sind. Diese Arretiermittel 33 greifen in einer Verriegelungsstellung der Runge formschlüssig ineinander und verhindern so ein Verschieben der Runge entlang des Dachholms. In einer entriegelten Stellung stehen die Arretiermittel 33 nicht im Eingriff miteinander, so dass die Runge entlang des Dachholms verschoben werden kann.

Die Arretiermittel 33 umfassen generell zwei Blockierelemente 34a, 34b und ein Eingriffselement 34c. Um die Verriegelungsstellung einzunehmen, greift das Eingriffselement 34c formschlüssig zwischen die zwei Blockierelemente 34a, 34b ein. Die einzelnen Ausführungsbeispiele gemäß Fig. 5 und 6 unterscheiden sich im Wesentlichen durch die Ausgestaltung und Anordnung der Arretiermittel 33.

Bei dem Ausführungsbeispiel gemäß Fig. 5 ist beispielsweise vorgesehen, dass das Eingriffselement 34c an einer dem Laderaum zugewandten Innenseite des Dachholms 40 angeordnet ist. Konkret ist das Eingriffselement 34c an einer Innenseite des Dachholms 40 durch Nieten befestigt. Das Eingriffselement 34c umfasst im Wesentlichen ein Blechteil, das in einem unteren Bereich trapezförmig verjüngend ausgebildet ist. Am Rungenkopf 32 der Runge 30 ist ein komplementär ausgebildetes Arretiermittel 33 vorgesehen, das zwei Blockierelemente 34a, 34b aufweist, welche einstückig miteinander verbunden sind und so ein einheitliches Blockiermittel bilden. Das Blockiermittel umfasst eine trapezförmige Ausnehmung, die die beiden Blockierelemente 34a, 34b voneinander trennt. Die trapezförmige Ausnehmung ist komplementär zur trapezförmigen Gestaltung des Eingriffselements 34 ausgebildet, woraus das Eingriffselement 34 zum Verriegeln der Runge 30 in die trapezförmige Ausnehmung eingreifen kann. Die beiden Blockierelemente 34a, 34b, die die trapezförmige Ausnehmung begrenzen, blockieren dann eine Verschiebung der Runge 30 entlang des Dachholms 40.

Das Überführen der Runge 30 von einer entriegelten Stellung in die Verriegelungsstellung erfolgt vorzugsweise dadurch, dass die Runge 30 angehoben wird, wodurch das Eingriffselement 34c zwischen die Blockierelemente 34a, 34b gleitet und dort den Formschluss bewirkt. Die trapezförmige Gestaltung des Eingriffselements 34 sorgt dabei für eine Selbstzentrierung beim Verriegeln. Das Anheben der Runge 30 kann beispielsweise durch einen entsprechenden Hebelmechanismus im Bereich des Rungenfußes erreicht werden. Vorzugsweise umfasst die Runge 30 einen zweiteiligen Aufbau mit einem Schiebling, so dass die Runge 30 insgesamt in ihrer Länge veränderbar ist. Das Anheben der Runge 30 bedeutet in diesem Fall ein teleskopartiges Verschieben eines Schieblings, so dass die Länge der Runge 30 verändert wird. Zum Entriegeln der Runge 30 wird der Schiebling herabgelassen, so dass der Eingriff zwischen dem Eingriffselement 34c und den Blockierelementen 34a, 34b gelöst wird.

Fig. 6 zeigt einen ähnlichen Aufbau eines Arretiermechanismus, wobei ein Eingriffselement 34d an der Innenseite des Dachholms 40 befestigt ist. Der Rungenkopf 32 umfasst zwei Blockierelemente 34a, 34b, die einstückig über einen Verbindungsabschnitt zu einem Blockiermittel verbunden sind. Das Ausführungsbeispiel gemäß Fig. 6 unterscheidet sich jedoch von dem Ausführungsbeispiel gemäß Fig. 5 im Wesentlichen dadurch, dass das Eingriffselement 34c eine parallelogrammartige Form aufweist. Die Blockierelemente 34a, 34b schließen dabei einen entsprechend parallelogrammförmigen Eingriffsraum 35 zwischen sich ein. Die Gestaltung des Eingriffselements 34c und des Eingriffsraums 35 in der Form eines Parallelogramms bewirkt, dass die Blockierelemente 34a, 34b und das Eingriffselement 34c in der Verriegelungsstellung zumindest teilweise einen vertikalen Formschluss bilden. Der Formschluss erfolgt also nicht, wie beispielsweise in Fig. 5, rein in horizontaler Richtung, so dass ein Verschieben der Runge 30 entlang des Dachholms 40 unterbunden wird. Vielmehr wird die parallelogrammartige Gestaltung des Eingriffselements 34c und des Eingriffsraums 35 bewirkt, dass auch eine vertikale Relativbewegung zwischen dem Dachholm 40 und der Runge 30 unterbunden werden kann. Damit wird erreicht, dass bei einem Nutzfahrzeugaufbau, der ein Hubdach aufweist, ein Anheben des Daches nicht versehentlich zu einem Lösen der Verriegelungsstellung der Runge 30 führt. Die Verbindung zwischen der Runge 30 und dem Dachholm 40 ist damit sichergestellt, so dass auch eine Ladungssicherung gewährleistet bleibt. Insbesondere bleibt gewährleistet, dass die Runge 30 in ihrer Verriegelungsstellung verbleibt, was für eine gute Einleitung von Ladungssicherungskräften in den Nutzfahrzeugaufbau wesentlich ist.

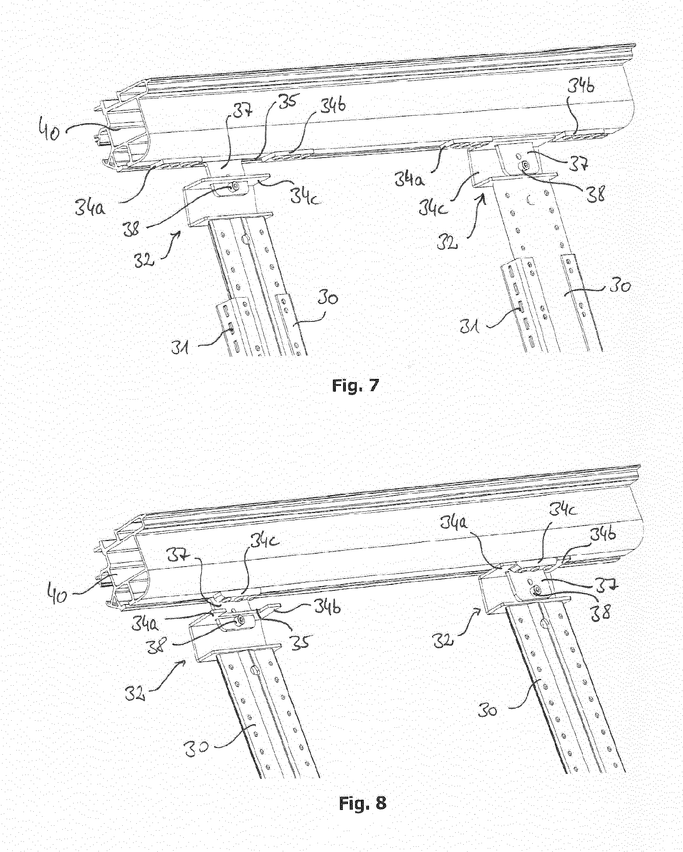

Bei dem Ausführungsbeispiel gemäß Fig. 7 sind die Blockierelemente 34a, 34b jeweils als separate Bauteile vorgesehen und an einer Unterseite des Dachholms 40 fixiert. Konkret sind die Blockierelemente 34a, 34b mit einer Unterseite des Dachholms 40 vernietet. Zwischen den Blockierelementen 34a, 34b ist ein Eingriffsraum 35 vorgesehen, der in der Verriegelungsstellung der Runge 30 durch ein Eingriffselement 34c geführt wird. Das Eingriffselement 34c lässt sich also formschlüssig zwischen die zwei Blockierelemente 34a, 34b fixieren.

Das Eingriffselement 34c ist bei dem Ausführungsbeispiel gemäß Fig. 7 als T-Profil ausgebildet, das in einem oberen Schenkel einen Schlitz aufweist. Durch den Schlitz greift ein Schwert eines Rollenlaufwagens ein, wobei unterhalb des Schenkels, also im Inneren des C-Profils, am Schwert ein Bolzen angeordnet ist, der ein Herausgleiten des Rungekopfes aus dem Schwert verhindert. Die Runge 30 ist in ihrer Länge verstellbar oder insgesamt anhebbar, wobei der Verstellweg einerseits durch die Unterseite des Dachholms 40 und andererseits durch den Bolzen 38 am Schwert 37 begrenzt wird. Wie in Fig. 7 erkennbar ist, weist die Runge die entriegelte Stellung auf, wenn das C-Profil des Rungenkopfes 32 im Wesentlichen auf dem Bolzen 38 aufliegt und insoweit das C-Profil nicht im formschlüssigen Eingriff zwischen den beiden Blockierelementen 34a, 34b angeordnet ist. Die Verriegelungsstellung ist dann eingenommen, wenn die Runge 30 bzw. der Rungenkopf 32 angehoben ist und das C-Profil des Rungenkopfes 32 formschlüssig zwischen die Blockierelemente 34a, 34b eingreift.

Fig. 8 zeigt einen ähnlichen Arretiermechanismus, wobei jedoch am Dachholm 40 ein Eingriffselement 34c angeordnet ist. Das Eingriffselement 34c ist auf einer Unterseite des Dachholms 40 angeordnet und vorzugsweise mit dem Dachholm 40 vernietet. Das Eingriffselement 34c weist vorzugsweise angefaste Kanten auf, um eine Selbstzentrierung beim Überführen der Runge 30 in die Verriegelungsstellung zu erreichen. Der Rungenkopf 32 umfasst ein C-förmiges Profil mit einem U-förmigen Ausschnitt, wobei der U-förmige Ausschnitt komplementär zum Eingriffselement 34c ausgebildet ist. Der U-förmige Ausschnitt bildet im Wesentlichen also einen Eingriffsraum 35, wobei die den U-förmigen Ausschnitt begrenzenden Schenkel des Rungenkopfs die Blockierelemente 34a, 34b bilden. Die Blockierelemente 34a, 34b sind über das C-förmige Profil des Rungenkopfes 32 einstückig zu einem gemeinsamen Blockiermittel verbunden.

Das C-förmige Profil des Rungenkopfes 32 umfasst wiederum einen Schlitz, durch den ein Schwert 37 eines Rollenlaufwagens der Runge 30 eingreift. Ein Herausgleiten des Rungenkopfes 32 von dem Schwert 37 wird durch einen Bolzen 38 verhindert. Die Runge lässt sich in ihrer Länge bzw. Höhe verstellen, so dass die Runge 30 eine entriegelte Stellung einnimmt, wenn der Rungenkopf 32 auf den Bolzen 38 abgesenkt ist und das Eingriffselement 34c insoweit nicht in den Eingriffsraum 35 eingreift. Sobald die Runge 30 angehoben oder in ihrer Länge erhöht wird, nähert sich der Rungenkopf 32 dem Dachholm 34 an, wodurch das Eingriffselement 34c in den Eingriffsraum 35 gelangt und so einen horizontalen Formschluss zwischen der Runge 30 und dem Dachholm 40 bewirkt. Eine Verschiebung der Runge 30 entlang des Dachholms 40 wird somit unterbunden.

### Bezugszeichenliste

- 1: Zurreinrichtung
- 10: Verankerungsseite
- 11: Verankerungselement
- 12: freier Schenkel
- 13: Verbindungsschenkel
- 14: randseitiges Verankerungselement
- 15: Fortsatz
- 16: Innenfläche
- 17: Außenfläche
- 18: Öse
- 19: Spitze
- 20: Vorderwand
- 30: Runge
- 31: Lochraster
- 32: Rungenkopf
- 33: Arretierelement
- 34a, 34b: Blockierelement
- 34c: Eingriffselement
- 35: Eingriffsraum
- 36: Rungenfuß
- 37: Schwert
- 38: Bolzen
- 40: Dachholm
- 50: Boden
- 51: Außenrahmen
- 60: Zurrgurt
- 61: Gurt
- 62: Haken
- 63: Spanneinrichtung
- 70: Ladung

## Patentansprüche

1. Ladungssicherungssystem mit wenigstens einer Zurreinrichtung (1) zur Teilladungssicherung in oder entgegen der Fahrtrichtung eines Nutzfahrzeugaufbaus mit einer Verankerungsseite (10), die wenigstens zwei, insbesondere wenigstens drei, Verankerungselemente (11) zum formschlüssigen Eingriff in ein Lochraster (31) einer Runge (30) des Fahrzeugaufbaus aufweist, und einer Runge (30) eines Nutzfahrzeugaufbaus, wobei die Runge (30) ein Lochraster (31) zur Aufnahme der Zurreinrichtung (1), insbesondere in unterschiedlichen Höhenpositionen, aufweist und zwischen einem Dachholm (40) und einem Boden (50) des Nutzfahrzeugaufbaus form- und/oder kraftschlüssig fixierbar oder fixiert ist, wobei am Dachholm (40) und an einem Rungenkopf (32) der Runge (30) Arretiermittel (33) vorgesehen sind, die in einer Verriegelungsstellung der Runge (30) formschlüssig ineinandergreifen, um ein Verschieben der Runge (30) entlang des Dachholms (40) zu unterbinden und wobei die Arretiermittel (33) zwei Blockierelemente (34a, 34b) und ein Eingriffselement (34c) umfassen, das in der Verriegelungsstellung formschlüssig zwischen die zwei Blockierelemente (34a, 34b) eingreift.

2. Ladungssicherungssystem nach Anspruch 1 **gekennzeichnet durch**
wenigstens ein flexibles Zurrmittel, insbesondere einen Gurt oder Zurrgurt, ein Seil, ein Netz oder eine Kette, das mit der Zurreinrichtung (1) verbindbar ist.

3. Ladungssicherungssystem nach Anspruch 1 oder 2
**dadurch gekennzeichnet, dass**
die Verankerungselemente (11) der Zurreinrichtung (1) jeweils einen parallel zur Verankerungsseite (10) verlaufenden freien Schenkel (12) aufweisen und alle freien Schenkel (12) in dieselbe Richtung orientiert und durch jeweils einen Verbindungsschenkel (13) mit der Verankerungsseite (10) verbunden sind.

4. Ladungssicherungssystem nach Anspruch 3
**dadurch gekennzeichnet, dass**
ein randseitiges Verankerungselement (14) einen Fortsatz (15) als Einführhilfe aufweist, der sich in Verlängerung des freien Schenkels (12) ausgehend von dem Verbindungsschenkel (13) in eine Gegenrichtung zu dem freien Schenkel (12) erstreckt und eine Länge aufweist, die größer als die Länge des freien Schenkels (12) ist.

5. Ladungssicherungssystem nach Anspruch 3 oder 4
**dadurch gekennzeichnet, dass**
alle freien Schenkel (12) die gleiche Länge aufweisen.

6. Ladungssicherungssystem nach einem der Ansprüche 3 bis 5
**dadurch gekennzeichnet, dass**
die freien Schenkel (12) und der Fortsatz (15) jeweils eine zur Verankerungsseite (10) gewandte Innenfläche (16) und eine der Innenfläche (16) gegenüberliegend angeordnete Außenfläche (17) aufweisen, wobei die Innenflächen (16) der freien Schenkel (12) und des Fortsatzes (15) miteinander fluchten.

7. Ladungssicherungssystem nach Anspruch 6
**dadurch gekennzeichnet, dass**
die Außenfläche (17) des Fortsatzes (15) geneigt ist, sodass sich der Fortsatz (15) mit zunehmendem Abstand von dem Verbindungsschenkel (13) verjüngt.

8. Ladungssicherungssystem nach einem der vorhergehenden Ansprüche **dadurch gekennzeichnet, dass**
die Zurreinrichtung (1) einstückig, insbesondere als Stanzteil oder als Gussteil oder als laser- oder wasserstrahlgeschnittenes Blech, ausgebildet ist.

9. Nutzfahrzeugaufbau mit einem Boden (50), wenigstens einem Dachholm (40) eines, insbesondere höhenverstellbaren, Dachs und einem Ladungssicherungssystem nach Anspruch 1, wobei sich die Runge (30) des Ladungssicherungssystems zwischen dem Dachholm (40) und dem Boden (50) erstreckt und am Dachholm (40) verschiebbar gelagert, kraft- und/oder formschlüssig mit dem Boden (50) verbindbar und von einer Verriegelungsstellung in eine entriegelte Stellung, und umgekehrt, überführbar ist und wobei am Dachholm (40) und an einem Rungenkopf (32) der Runge (30) Arretiermittel (33) vorgesehen sind, die in einer Verriegelungsstellung der Runge (30) formschlüssig ineinandergreifen, um ein Verschieben der Runge (30) entlang des Dachholms (40) zu unterbinden und wobei die Arretiermittel (33) zwei Blockierelemente (34a, 34b) und ein Eingriffselement (34c) umfassen, das in der Verriegelungsstellung formschlüssig zwischen die zwei Blockierelemente (34a, 34b) eingreift.

10. Nutzfahrzeugaufbau nach Anspruch 9
**dadurch gekennzeichnet, dass**
die Blockierelemente (34a, 34b) am Dachholm (40) und das Eingriffselement (34c) am Rungenkopf (32) oder dass
die Blockierelemente (34a, 34b) am Rungenkopf (32) und das Eingriffselement (34c) am Dachholm (40) angeordnet sind.

11. Nutzfahrzeugaufbau nach Anspruch 9 oder 10
**dadurch gekennzeichnet, dass**
die Blockierelemente (34a, 34b) voneinander unabhängig am Dachholm (40) oder am Rungenkopf (32) befestigt oder einstückig über einen Verbindungsabschnitt zu einem Blockiermittel verbunden sind, das am Dachholm (40) oder dem Rungenkopf (32) befestigt ist.

12. Nutzfahrzeugaufbau nach einem der Ansprüche 9 bis 11
**dadurch gekennzeichnet, dass**
die Blockierelemente (34a, 34b) oder das Eingriffselement (34c) auf einer horizontalen Fläche des Dachholms (40) oder des Rungenkopfs (32) angeordnet sind.

13. Nutzfahrzeugaufbau nach einem der Ansprüche 9 bis 12
**dadurch gekennzeichnet, dass**
die Blockierelemente (34a, 34b) und das Eingriffselement (34c) in der Verriegelungsstellung zumindest teilweise einen vertikalen Formschluss bilden.

14. Nutzfahrzeugaufbau nach einem der Ansprüche 9 bis 13
**dadurch gekennzeichnet, dass**
sich die Blockierelemente (34a, 34b) vertikal erstrecken und einen trapezförmigen oder parallelogrammförmigen Eingriffsraum (35) zwischen sich bilden, wobei das Eingriffselement (34c) in vertikaler Richtung trapezförmig oder parallelogrammförmig komplementär zu dem trapezförmigen oder parallelogrammförmigen Eingriffsraum (35) ausgebildet ist.

## Claims

1. A load-securing system having at least one lashing device (1) for partial load securing in or counter to the direction of travel of a commercial vehicle structure with an anchoring side (10), which has at least two, in particular at least three, anchoring elements (11) for form-fitting engagement in a hole grid (31) of a stanchion (30) of the vehicle structure, and a stanchion (30) of a commercial vehicle structure, wherein the stanchion (30) has a hole grid (31) for receiving the lashing device (1), in particular at different height positions, and is fixable or fixed form- and/or force-fittingly between a roof rail (40) and a floor (50) of the commercial vehicle structure, wherein arresting means (33) are provided on the roof rail (40) and on a stanchion head (32) of the stanchion (30), said arresting means interlocking form-fittingly in a locking position of the stanchion (30) in order to prevent displacement of the stanchion (30) along the roof rail (40), and wherein the arresting means (33) comprise two blocking elements (34a, 34b) and an engagement element (34c), which engages form-fittingly between the two blocking elements (34a, 34b) in the locking position.

2. The load-securing system according to claim 1,
**characterised by**
at least one flexible lashing means, in particular a strap or lashing strap, a rope, a net or a chain, which can be connected to the lashing device (1).

3. The load-securing system according to claims 1 or 2,
**characterised in that**
the anchoring elements (11) of the lashing device (1) each have a free leg (12), which runs parallel to the anchoring side (10), and all the free legs (12) are oriented in the same direction and are connected to the anchoring side (10) by one connecting leg (13) each.

4. The load-securing system according to claim 3,
**characterised in that**
an edge-side anchoring element (14) has an extension (15) as an insertion aid, which extends in continuation of the free leg (12) from the connecting leg (13) in an opposing direction to the free leg (12) and has a length that is greater than the length of the free leg (12).

5. The load-securing system according to claims 3 or 4,
**characterised in that**
all the free legs (12) have the same length.

6. The load-securing system according to any of claims 3-5,
**characterised in that**
the free legs (12) and the extension (15) each have an inner surface (16), which faces the anchoring side (10), and an outer surface (17), which is arranged opposite the inner surface (16), wherein the inner surfaces (16) of the free legs (12) and of the extension (15) align with one another.

7. The load-securing system according to claim 6,
**characterised in that**
the outer surface (17) of the extension (15) is inclined so that the extension (15) tapers with increasing distance from the connecting leg (13).

8. The load-securing system according to any one of the preceding claims,
**characterised in that**
the lashing device (1) is formed as a single piece, in particular as a punched part or as a cast part or as a laser- or water-jet-cut metal sheet.

9. A commercial vehicle structure having a floor (50), at least one roof rail (40) of a roof, in particular a height-adjustable roof, and a load-securing system according to Claim 1, wherein the stanchion (30) of the load-securing system extends between the roof rail (40) and the floor (50) and is displaceably mounted on the roof rail (40), can be connected force- and/or form-fittingly to the floor (50), and can be transferred from a locking position into an unlocked position and vice versa, and wherein arresting means (33) are provided on the roof rail (40) and on a stanchion head (32) of the stanchion (30), said arresting means interlocking form-fittingly in a locking position of the stanchion (30) in order to prevent displacement of the stanchion (30) along the roof rail (40), and wherein the arresting means (33) comprise two blocking elements (34a, 34b) and an engagement element (34c), which engages form-fittingly between the two blocking elements (34a, 34b) in the locking position.

10. The commercial vehicle structure according to claim 9,
**characterised in that**
the blocking elements (34a, 34b) are arranged on the roof rail (40), and the engagement element (34c) is arranged on the stanchion head (32), or **in that** the blocking elements (34a, 34b) are arranged on the stanchion head (32), and the engagement element (34c) is arranged on the roof rail (40).

11. The commercial vehicle structure according to claims 9 or 10,
**characterised in that**
the blocking elements (34a, 34b) are fastened to the roof rail (40) or to the stanchion head (32) independently of one another or are connected integrally via a connecting portion to form a blocking means, which is fastened to the roof rail (40) or the stanchion head (32).

12. The commercial vehicle structure according to any of claims 9-11,
**characterised in that**
the blocking elements (34a, 34b) or the engagement element (34c) are arranged on a horizontal surface of the roof rail (40) or of the stanchion head (32).

13. The commercial vehicle structure according to any of claims 9 -12,
**characterised in that**
the blocking elements (34a, 34b) and the engagement element (34c) at least partially form a vertical form fit in the locking position.

14. The commercial vehicle structure according to any of claims 9-13,
**characterised in that**
the blocking elements (34a, 34b) extend vertically and form a trapezoidal or parallelogram-shaped engagement space (35) between them, wherein the engagement element (34c) has a complementary trapezoidal or parallelogram shape to the trapezoidal or parallelogram-shaped engagement space (35) in the vertical direction.

## Revendications

1. Système de sécurisation de chargement, pourvu d'au moins un dispositif d'arrimage (1) pour la sécurisation partielle d'un chargement dans ou à l'encontre de la direction de déplacement d'une superstructure de véhicule utilitaire pourvu d'un côté d'ancrage (10), qui comporte au moins deux, notamment au moins trois éléments d'ancrage (11) destinés à s'engager par complémentarité de forme dans une trame perforée (31) d'un rancher (30) de la superstructure de véhicule et dans un rancher (30) d'une superstructure de véhicule utilitaire, le rancher (30) comportant une trame perforée (31) destinée à recevoir le dispositif d'arrimage (1), notamment dans différentes positions en hauteur et qui est susceptible d'être fixée ou qui est fixée par complémentarité de forme et / ou de force entre un montant de toit (40) et un fond inférieur (50) de superstructure de véhicule utilitaire, sur le montant de toit (40) et sur une tête de rancher (32) du rancher (30) étant prévus des moyens d'arrêt (33), qui dans une position de verrouillage du rancher (30) s'engagent les uns dans les autres par complémentarité de forme, pour empêcher un déplacement du rancher (30) le long du montant de toit (40) et les moyens d'arrêt (33) comprenant deux éléments de blocage (34a, 34b) et un élément d'engagement (34c), qui dans la position de verrouillage s'engage par complémentarité de forme entre les deux éléments de blocage (34a, 34b).

2. Système de sécurisation de chargement selon la revendication 1,
**caractérisé par**
au moins un moyen d'arrimage flexible, notamment une sangle ou sangle d'arrimage, un câble, un filet ou une chaîne qui est susceptible d'être assemblé avec le dispositif d'arrimage (1).

3. Système de sécurisation de chargement selon la revendication 1 ou 2,
**caractérisé en ce que**
les éléments d'ancrage (11) du dispositif d'arrimage (1) comportent chacun une branche (12) libre, s'écoulant à la parallèle du côté d'ancrage (10) et toutes les branches (12) libres sont orientées dans la même direction et sont assemblées par chaque fois une branche d'assemblage (13) avec le côté d'ancrage (10).

4. Système de sécurisation de chargement selon la revendication 3,
**caractérisé en ce que**
un élément d'ancrage (14) marginal comporte en tant qu'auxiliaire d'introduction un prolongement (15), qui dans la prolongation de la branche (12) libre s'étend en partant de la branche d'assemblage (13) dans une direction opposée à la branche (12)libre et qui présente une longueur qui est supérieure à la longueur de la branche (12) libre.

5. Système de sécurisation de chargement selon la revendication 3 ou 4,
**caractérisé en ce que**
toutes les branches (12) présentent la même longueur.

6. Système de sécurisation de chargement selon l'une quelconque des revendications 3 à 5,
**caractérisé en ce que**
les branches (12) libres et le prolongement (15) comportent chacun une surface intérieure (16) tournée vers le côté d'ancrage (10) et une surface extérieure (17) placée au vis-à-vis de la surface intérieure (16), les surfaces intérieures (16) des branches (12) libres et du prolongement (15) étant alignées entre elles.

7. Système de sécurisation de chargement selon la revendication 6,
**caractérisé en ce que**
la surface extérieure (17) du prolongement (15) est inclinée, de telle sorte que le prolongement (15) s'effile au fur et à mesure qu'il s'écarte de la branche d'assemblage (13).

8. Système de sécurisation de chargement selon l'une quelconque des revendications précédentes,
**caractérisé en ce que**
le dispositif d'arrimage (1) est conçu en monobloc, notamment sous la forme d'une pièce découpée ou d'une pièce moulée, ou d'une tôle découpée au laser ou au jet d'eau.

9. Superstructure de véhicule utilitaire, pourvue d'un fond inférieur (50), d'au moins un montant de toit (40) d'un toit, notamment réglable en hauteur et d'un système de sécurisation de chargement selon la revendication 1, le rancher (30) du système de sécurisation de chargement s'étendant entre le montant de toit (40) et le fond inférieur (50) et étant logé de manière déplaçable sur le montant de toit (40), étant susceptible d'être assemblé par complémentarité de force et / ou de forme avec le fond inférieur (50) et pouvant se transférer d'une position de verrouillage dans une position déverrouillée et inversement et sur le montant de toit (40) et sur une tête de rancher (32) du rancher (30) étant prévus des moyens d'arrêt (33), qui dans une position de verrouillage du rancher (30) s'engagent les uns dans les autres par complémentarité de forme, pour empêcher un déplacement du rancher (30) le long du montant de toit (40) et les moyens d'arrêt (33) comprenant deux éléments de blocage (34a, 34b) et un élément d'engagement (34c), qui dans la position de verrouillage s'engage par complémentarité de forme entre les deux éléments de blocage (34a, 34b).

10. Superstructure de véhicule utilitaire selon la revendication 9,
**caractérisée en ce que**
les éléments de blocage (34a, 34b) sont placés sur le montant de toit (40) et l'élément d'engagement (34c) est placé sur la tête de rancher (32) ou **en ce que** les éléments de blocage (34a, 34b) sont placés sur la tête de rancher (32) et l'élément d'engagement (34c) est placé sur le montant de toit (40).

11. Superstructure de véhicule utilitaire selon la revendication 9 ou 10,
**caractérisée en ce que**
les éléments de blocage (34a, 34b) sont fixés indépendamment les uns des autres sur le montant de toit (40) ou sur la tête de rancher (32) ou sont fixés en monobloc par l'intermédiaire d'une portion d'assemblage sur un moyen de blocage, lequel est fixé sur le montant de toit (40) ou sur la tête de rancher (32).

12. Superstructure de véhicule utilitaire selon l'une quelconque des revendications 9 à 11,
**caractérisée en ce que**
les éléments de blocage (34a, 34b) ou l'élément d'engagement (34c) sont placés sur une surface horizontale du montant de toit (40) ou de la tête de rancher (32).

13. Superstructure de véhicule utilitaire selon l'une quelconque des revendications 9 à 12,
**caractérisée en ce que**
dans la position de verrouillage, les éléments de blocage (34a, 34b) et l'élément d'engagement (34c) forment au moins en partie une complémentarité de forme verticale.

14. Superstructure de véhicule utilitaire selon l'une quelconque des revendications 9 à 13,
**caractérisée en ce que**
les éléments de blocage (34a, 34b) s'étendent à la verticale et forment entre eux un espace d'engagement (35) en forme de trapèze ou de parallélogramme, dans la position verticale, l'élément d'engagement (34c) étant conçu en forme de trapèze ou de parallélogramme de manière complémentaire à l'espace d'engagement (35) en forme de trapèze ou de parallélogramme.
